# EUROPÄISCHE PATENTSCHRIFT

(11) **EP 3 083 480 B1**
(45) Veröffentlichungstag und Bekanntmachung des Hinweises auf die Patenterteilung: **01.04.2020**
(21) Anmeldenummer: 14800016.9
(22) Anmeldetag: 14.11.2014
(51) Int. Cl.: B66B 25/00

(54) **ANORDNUNG EINES ÜBERWACHUNGSSENSORS IN EINER FAHRTREPPE ODER IN EINEM FAHRSTEIG**
ASSEMBLY OF A MONITORING SENSOR IN AN ESCALATOR OR IN A MOVING WALKWAY
AGENCEMENT D'UN CAPTEUR DE SURVEILLANCE DANS UN ESCALIER OU UN TROTTOIR ROULANT

(30) Priorität: 20.12.2013 EP 13198751
(43) Veröffentlichungstag der Anmeldung: 26.10.2016
(73) Patentinhaber: Inventio AG, 6052 Hergiswil (CH)
(72) Erfinder: BLONDIAU, Dirk, A-1190 Wien (AT); STOIBER, Gerhard, A-2225 Gösting (AT); STEINDL, Günter, A-1230 Wien (AT); BURRI, Jürg, CH-5042 Hirschthal (CH); MATHEISL, Michael, A-2331 Vösendorf (AT)
(86) Internationale Anmeldenummer: PCT/EP2014/074641
(87) Internationale Veröffentlichungsnummer: WO 2015/090764

(56) Entgegenhaltungen:
- EP-B1- 1 541 519
- JP-A- H0 812 238
- KR-A- 20090 028 393
- US-A1- 2001 002 644

## Beschreibung

Die Erfindung betrifft eine Anordnung eines Überwachungssensors in einer Fahrtreppe oder in einem Fahrsteig.

Überwachungssensoren können eine Vielzahl von Betriebsdaten an die Steuerung einer Fahrtreppe oder eines Fahrsteiges übermitteln, um den Betrieb dieser Personentransporteinrichtungen zu optimieren und/oder deren Betriebssicherheit zu erhöhen.

Bei bekannten Steuerungen für Fahrtreppen und Fahrsteige wird beispielsweise der Antrieb bei einer unbenutzten Fahrtreppe ausgeschaltet oder in einem als "Schleichfahrt" bezeichneten, energiesparenden Modus mit reduzierter Geschwindigkeit betrieben. Nähern sich Benutzer der Fahrtreppe, so wird zum Beispiel beim Durchschreiten einer Lichtschranke oder beim Passieren eines Infrarotsensors ein Impuls ausgelöst und der Antrieb eingeschaltet beziehungsweise die Geschwindigkeit des Antriebes erhöht. Nach Ablauf einer vorgegebenen Zeitdauer, frühestens nach Verlassen des letzten Benutzers der Fahrtreppe wird der Antrieb wieder abgeschaltet. Der dazu notwendige Überwachungssensor ist, wie beispielsweise in der WO 98/18711 A1 offenbart, in einer seitlich des Zugangsbereiches angeordneten Säule oder in einem Pfosten untergebracht, um die Benutzer zuverlässig erfassen zu können.

Die EP 1 541 519 B1 offenbart eine Anordnung von mindestens einem Radar-Überwachungssensor, der zur Erfassung des sich einer Fahrtreppe oder eines Fahrsteiges nähernden Benutzers dient. Dieser Überwachungssensor ist hinter einer opaken Handlaufeinlaufkappe verborgen, damit er nicht zum Ziel von Vandalismus wird.

Die JP H08 12238 A offenbart eine Fahrtreppe und ein Verfahren gemäß den Oberbegriffen der Ansprüche 1 bzw. 14.

Die vorangehend beschriebenen Anordnungen von Überwachungssensoren weisen den Nachteil auf, dass sie nicht den gesamten Zugangsbereich überwachen können. Durch die Anordnung in einem separaten Pfosten oder in der Handlaufeinlaufkappe der Personentransportvorrichtung werden zwangsläufig Bereiche des jeweiligen zu überwachenden Zugangsbereiches nicht erfasst. Insbesondere die Bereiche nahe an der Kammplatte sind vom Erfassungskegel des Überwachungssensors nicht erreichbar, da Teile der Balustrade oder des Balustradensockels die Erfassung behindern beziehungsweise stören. Dies kann dazu führen, dass ältere Benutzer, welche sich in diesen Bereichen längere Zeit aufhalten, für die Steuerung der Fahrtreppe oder des Fahrsteiges nicht mehr erkennbar sind und daher eine gewünschte Reaktion der Steuerung wie beispielsweise das Starten des Stufenbandes oder Palettenbandes ausbleibt.

Die Aufgabe der vorliegenden Erfindung ist daher, eine Anordnung für mindestens einen Überwachungssensor vorzuschlagen, die es ermöglicht, den zugeordneten Zugangsbereich besser zu überwachen.

Diese Aufgabe wird gelöst durch eine Fahrtreppe oder einen Fahrsteig, die zwei Zugangsbereiche mit je einer Kammplatte und einen zwischen den Zugangsbereichen angeordneten Förderbereich aufweisen. Der Förderbereich erstreckt sich in seiner Länge zwischen den beiden Kammplatten der Zugangsbereiche. Der Förderbereich ist ferner quer zu seiner Länge beziehungsweise Längserstreckung durch die Balustraden und Balustradensockel der Fahrtreppe oder des Fahrsteiges begrenzt. Das bedeutet, dass der Querschnitt des Förderbereichs durch die gegen das Stufenband oder Palettenband gerichteten Flächen der Balustradensockel und der Balustraden begrenzt ist. An mindestens einem feststehenden Teil der Fahrtreppe oder des Fahrsteiges ist zumindest ein in den Förderbereich hineinragender Vorsprung angeordnet, wobei mindestens ein Überwachungssensor zumindest teilweise im mindestens einen Vorsprung angeordnet ist. Das Merkmal Vorsprung wird in der vorliegenden Schrift als Synonym für eine Auswölbung, Auskragung, Ausbuchtung, Ausbeulung oder einen Anbau mit weitgehend gerundeten Konturen verwendet. Da die Balustradensockel den Förderbereich begrenzende Konturen sind, stellen sie keine in den Förderbereich hineinragenden Vorsprünge im Sinne der Erfindung dar.

Aus Sicherheitsgründen sind in den Förderbereich hineinragende Bauteile nicht erlaubt, wenn die Gefahr besteht, dass daran beispielsweise Gegenstände oder gar die Kleider oder Gliedmaßen von Benutzern hängenbleiben könnten. Deshalb darf beispielsweise ein Bedienelement oder ein Sensor nur etwa 3mm in den Förderraum hervorstehen. Diese 3mm erlauben aber keine Unterbringung eines Überwachungssensors in einer Weise, dass dessen Erfassungskegel auch entlang der Wand, in oder an der der Überwachungssensor eingebaut ist, Objekte erfassen kann. Ein in den Förderbereich hineinragender Vorsprung der zumindest eine teilweise Unterbringung eines Überwachungssensors erlaubt, stellt somit eine Abkehr zur gängigen Lehre dar. Dies deshalb, weil der Vorsprung deutlich mehr als die erlaubten 3mm vorstehen muss, damit der Erfassungskegel des Überwachungssensors zumindest auch eine, dem Überwachungssensor angrenzende Wand wie beispielsweise eine Balustradenpaneele oder ein Sockelblech erfassen kann.

Das Merkmal Vorsprung umschreibt einen in den Förderbereich vorstehenden Bereich, dessen Kontur zumindest in der Förderrichtung keine von Benutzern erreichbare Kante oder Fläche aufweist, die einen zwischen der Kante beziehungsweise der Fläche und der Förderrichtung eingeschlossenen Winkel 90° > α > 0° aufweist. Vorzugsweise sind alle Kanten des Vorsprungs gerundet und, sofern vorhanden, dessen Flächen gegebenenfalls bombiert, so dass der Vorsprung zumindest in der Förderrichtung eine stetig verlaufende Kontur aufweist. Sofern der Vorsprung direkt an einem, sich parallel zur Förderrichtung der Fahrtreppe oder des Fahrsteiges erstreckenden Bauteil der Fahrtreppe oder des Fahrsteiges angeformt ist, können auch die Übergänge zwischen der Kontur des Vorsprungs und einer ebenen Oberfläche des Bauteils durch Übergangsradien stetig verlaufend ausgestaltet sein.

Durch den in den Förderbereich hineinragenden Vorsprung kann für einen Überwachungssensor eine ideale, ausreichend vorstehende Position geschaffen werden, die es diesem ermöglicht, einen zu überwachenden Bereich in der gesamten Breite des Förderbereiches beziehungsweise in der gesamten Breite des Zugangsbereiches von der Kammplatte an, zuverlässig zu erfassen und zu überwachen. Dies ist mit einem Überwachungssensor, der beispielsweise an der dem Förderbereich abgewandten Seite der Balustrade und damit außerhalb des Förderbereiches angeordnet ist, kaum möglich. Bei einer solchen Anordnung müsste der Überwachungssensor durch die Balustrade hindurch die Benutzer erfassen. Dabei könnten bei als Überwachungssensor eingesetzten Radarsensoren Störungen auftreten, die beispielsweise durch im umlaufenden Handlauf als Zugträger dienende Stahlseile und durch Metallabdeckungen des Balustradensockels verursacht werden. Auch für Infrarotsensoren, CCD- Kameras oder TOF- Kameras ist eine solche Anordnung ungeeignet, da zwischen dem zu erfassenden Zugangsbereich und dem Überwachungssensor beispielsweise ein Glaspaneel der Balustrade angeordnet ist, an dem Schmutz haften bleiben kann, so dass bei übermäßiger Verschmutzung der Überwachungssensor gewissermaßen blind wird. Ferner ist ein solchermaßen angeordneter Überwachungssensor für potenzielle Vandalen sofort erkennbar.

Die Anordnung des Überwachungssensors in einem in den Förderbereich hineinragenden Vorsprung weist auch wirtschaftliche Vorteile auf. Durch die ausreichend vorstehende Position, die der Vorsprung ermöglicht, kann mit nur einem Überwachungssensor ein ganzer Zugangsbereich und/oder der Förderbereich erfasst werden. Ohne die vorstehende Anordnung des Überwachungssensors müsste eine Vielzahl von Überwachungssensoren eingesetzt werden, um einen zugeordneten Zugangsbereich vollständig erfassen zu können. Eine Lösung mit einer Vielzahl von Überwachungssensoren ist aber mit einem erheblichen Kostenaufwand verbunden. Der Kostenaufwand betrifft nicht nur die Mehrzahl von Überwachungssensoren, sondern auch deren Verkabelung mit der Steuerung, die Verarbeitung mehrerer Signale sowie der erhöhte Wartungsaufwand. Nicht zu vergessen ist die erhöhte Fehleranfälligkeit des gesamten Steuerungssystems der Fahrtreppe oder des Fahrsteiges, wenn die Anzahl Überwachungssensoren erhöht wird. Aus Redundanzgründen können aber selbstverständlich auch zwei oder mehrere, gegebenenfalls auch verschieden arbeitende Überwachungssensoren einem Zugangsbereich der Fahrtreppe oder des Fahrsteiges zugeordnet sein.

Erfindungsgemäß dient der Überwachungssensor der Überwachung eines zugeordneten Zugangsbereiches der Fahrtreppe oder des Fahrsteiges. Der zu überwachende Zugangsbereich erstreckt sich üblicherweise in seiner, durch zwei Balustraden der Fahrtreppe oder des Fahrsteiges definierten Breite sowie in seiner, von der Kammplatte bis mindestens zu den, im Bereich des zu überwachenden Zugangsbereiches angeordneten Enden der beiden Balustraden erstreckenden Länge. Um dies zu erreichen, kann die Position des Vorsprungs vom zu überwachenden Zugangsbereich soweit in den Förderbereich zurückversetzt angeordnet sein, dass der gesamte Zugangsbereich durch einen Erfassungskegel des Überwachungssensors abdeckbar ist.

Aufgrund der vorstehenden Position kann ein Erfassungskegel des Überwachungssensors auch entlang einer Wand, in welcher oder an welcher der Vorsprung mit dem Überwachungssensor angeordnet ist, Objekte beziehungsweise Benutzer erfassen. Die vorgenannte Wand kann beispielsweise eine Balustrade, eine Balustradenpaneele, eine Sockelwand ein Sockelblech und dergleichen mehr sein, die das weiter unten beschriebene Lichtraumprofil der Fahrtreppe oder des Fahrsteiges abgrenzen.

Die lückenlose Erfassung des gesamten Zugangsbereiches bis zur Kammplatte ermöglicht eine ausgezeichnete, benutzerorientierte Steuerung des Antriebes, mit dem das Stufenband der Fahrtreppe oder das Palettenband des Fahrsteiges verbunden ist. Wenn beispielsweise ein älterer Benutzer eine Fahrtreppe oder einen Fahrsteig betreten will, bewegt er sich langsam auf das Stufenband beziehungsweise Palettenband zu und bleibt üblicherweise einige Zehntelsekunden an der Kammplatte stehen, bevor er den Schritt auf eine Stufe wagt. Durch die Erfassung des gesamten Zugangsbereiches kann diese Situation richtig erfasst und die Geschwindigkeit des Stufenbandes oder Palettenbandes beispielsweise den Bedürfnissen des älteren Benutzer angepasst werden, bis er den erfassten Bereich des Überwachungssensors durch Überschreiten der Kammplatte in Richtung des Förderbereichs verlassen hat.

Benutzer die es eilig haben und entsprechend rasch den Zugangsbereich durchschreiten, haben hingegen das Bedürfnis, dass das Stufenband die normale Fördergeschwindigkeit aufweist, wenn sie die Kammplatte überschreiten. Durch die Erfassung des gesamten Zugangsbereiches bleibt ausreichend Zeit, die Geschwindigkeit des Stufenbandes zu erhöhen, bis der eilige Benutzer die Kammplatte überschreitet. Wenn sich Personen zu lange unmittelbar vor der Kammplatte aufhalten, kann dies ein Hinweis sein, dass sich spielende Kinder oder Vandalen im Zugangsbereich aufhalten. Um ein potentielles Verletzungsrisiko zu minimieren, kann in diesem Fall beispielsweise der Antrieb ganz abgeschaltet oder die Geschwindigkeit des Stufenbandes oder Palettenbandes verringert werden.

Wie bereits weiter oben erwähnt, können Überwachungssensoren das Ziel von Lausbubenstreichen oder Vandalismus werden, wenn sie leicht erkennbar sind. Um den Vorsprung zu tarnen, kann am Vorsprung eine in den Förderbereich ragende Vorrichtung angeordnet sein. Dies kann beispielsweise ein Beleuchtungskörper sein, durch den die Kammplatte beleuchtet werden kann.

Der Vorsprung lässt sich noch besser verbergen, wenn sich die Vorrichtung über mindestens einen Viertel der Länge des Förderbereiches erstreckt und als Lichtraumprofil beeinflussende Kontur des Förderbereiches wahrgenommen wird. Noch besser lässt sich der Vorsprung verbergen, wenn sich die Vorrichtung über die Länge des Förderbereiches erstreckt. Das Lichtraumprofil im Sinne der vorliegenden Schrift entspricht dem Querschnitt des Förderbereichs, wobei das Lichtraumprofil auf der Höhe des umlaufenden Handlaufs endet und bei einer Fahrtreppe oder einem Fahrsteig gattungsgemäß nach Oben offen ist. Entsprechend ist der als Förderbereich bezeichnete Raum in seiner Höhe auch durch den umlaufenden Handlauf begrenzt, auch wenn zu fördernde Benutzer und Gegenstände nach Oben aus dem Förderbereich hinausragen.

Wenn jedem der beiden Zugangsbereiche ein Überwachungssensor in einem Vorsprung zugeordnet ist, erstreckt sich die Vorrichtung vorzugsweise zwischen den beiden Vorsprüngen der beiden Zugangsbereiche. Dadurch können mit nur einer Vorrichtung beide Vorsprünge getarnt werden.

Es gibt viele Möglichkeiten, im Lichtraumprofil eines Förderbereiches einen Vorsprung und die an den Vorsprung anschließende Vorrichtung an einem feststehenden Teil der Fahrtreppe oder des Fahrsteiges anzuordnen.

In einer Ausführung der Erfindung können der feststehende Teil ein Balustradensockel, der Vorsprung ein am Balustradensockel angeordnetes Anfangselement einer Abweiserbürste und die Vorrichtung eine Abweiserbürste sein. Die Abweiserbürste, beispielsweise in der EP 1 262 441 B1 offenbart, ist an sich ein gebräuchliches und oft eingesetztes Mittel, um die Schuhe der Benutzer vom Sockelblech der Fahrtreppe oder des Fahrsteiges fernzuhalten.

In einer weiteren Ausführung der Erfindung kann der feststehende Teil eine Balustrade sein, die Vorrichtung kann eine Handlaufführung der Balustrade sein und der Vorsprung kann an der Handlaufführung ausgebildet sein.

In einer weiteren Ausführung der Erfindung kann der feststehende Teil eine Balustradenbeleuchtung sein, die Vorrichtung kann eine Abdeckung der Balustradenbeleuchtung sein und der Vorsprung kann an der Abdeckung ausgebildet sein.

In einer weiteren Ausführung der Erfindung kann der feststehende Teil ein

Balustradensockel, die Vorrichtung eine Stufenbandbeleuchtung oder eine Palettenbandbeleuchtung und der Vorsprung ein Anfangselement der Stufenbandbeleuchtung oder Palettenbandbeleuchtung sein.

Der Überwachungssensor kann vollständig im Vorsprung angeordnet sein. Dies ist jedoch nicht zwingend. Wenn der Vorsprung gegen einen Innenraum der Fahrtreppe oder des Fahrsteiges offen ist, können ein Sensorkopf des Überwachungssensors im Vorsprung und ein Sensorgehäuse des Überwachungssensors im durch Verkleidungen abgegrenzten Innenraum der Fahrtreppe oder des Fahrsteiges angeordnet sein. Ferner kann die Auswertungs- und Steuerungselektronik des Überwachungssensors im Sensorgehäuse und/oder in einem separaten Gehäuse und/oder in der Steuerung der Fahrtreppe angeordnet sein.

Als Überwachungssensor können alle zur Erfassung von Personen beziehungsweise Benutzern der Fahrtreppe oder des Fahrsteiges geeignete Sensoren wie beispielsweise ein Radarsensor, ein Infrarotsensor, ein Laserscanner eine CCD-Kamera oder vorzugsweise eine TOF- Kamera verwendet werden. TOF-Kameras sind 3D-Kamerasysteme, die mit einem Laufzeitverfahren (time of flight sensor) Distanzen messen. Dazu wird die Szene beziehungsweise der Abtastraum mittels eines Lichtpulses ausgeleuchtet und die Kamera misst für jeden Bildpunkt die Zeit, die das Licht bis zum Objekt und wieder zurück braucht. Die benötigte Zeit ist direkt proportional zur Distanz. Die Kamera liefert somit für jeden Bildpunkt die Entfernung des darauf abgebildeten Objektes. Das Prinzip entspricht dem Laserscanning mit dem Vorteil, dass eine ganze Szene auf einmal aufgenommen wird und nicht abgetastet werden muss.

Da TOF-Kameras im Entfernungsbereich von einigen Dezimetern bis ungefähr 40 Meter eingesetzt werden können, eignen sie sich hervorragend als Überwachungssensor für die Zugangsbereiche einer Fahrtreppe oder eines Fahrsteiges. Die zurzeit erreichbare Distanzauflösung beträgt dabei etwa 1 cm, die lateralen Auflösungen erreichen etwa 200 x 200 Pixel. Die Kameras können zurzeit bis zu 160 Bilder pro Sekunde liefern. Die einfachste Form von TOF-Kameras arbeitet mit Lichtpulsen, die beispielsweise mittels einer Infrarot- LED erzeugt werden. Die Beleuchtung wird für einen kurzen Moment eingeschaltet, der Lichtpuls beleuchtet die Szene und wird an den Objekten reflektiert. Das Objektiv der Kamera sammelt dieses Licht und bildet die Szene auf dem Sensor ab. Je nach Distanz erfährt das auf den einzelnen Pixeln auftreffende Licht eine Verzögerung, die als Distanzinformation ausgewertet werden kann.

Durch die hohe Anzahl von Bildern pro Sekunde, die ein Überwachungssensor der vorgenannten Art liefern kann, können ganz neue Betriebsverfahren implementiert werden, die den unterschiedlichen Bedürfnissen der Benutzer Rechnung tragen können.

Beispielsweise können benutzerorientierte Verfahren zum Betrieb einer Fahrtreppe oder eines Fahrsteiges im Steuerungskonzept implementiert werden, wenn mindestens ein im Vorsprung angeordneter Überwachungssensor vorhanden ist. Die durch den Überwachungssensor generierten Überwachungssignale können beispielsweise in einer Steuerung der Fahrtreppe oder des Fahrsteiges dahingehend ausgewertet werden, ob sich ein Benutzer rasch der Kammplatte nähert, ob sich ein Benutzer langsam der Kammplatte nähert, oder ob sich eine Person längere Zeit im vom Überwachungssensor überwachten Zugangsbereich aufhält.

Diese ausgewerteten Informationen können zur Steuerung des Antriebs der Fahrtreppe oder des Fahrsteiges herangezogen werden. Wenn sich ein Benutzer rasch der Kammplatte nähert, kann beispielsweise die Geschwindigkeit des Stufenbandes oder Palettenbandes von einer langsamen Fördergeschwindigkeit auf eine normale Fördergeschwindigkeit beziehungsweise Norm-Fördergeschwindigkeit erhöht werden, bevor der Benutzer die Kammplatte überschritten hat. Wenn das Stufenband oder Palettenband bereits eine normale Fördergeschwindigkeit hat und sich ein Benutzer rasch der Kammplatte nähert, kann die normale Fördergeschwindigkeit beibehalten werden.

Wenn sich ein Benutzer langsam beziehungsweise zögerlich der Kammplatte des Zugangsbereiches nähert, kann ein stehendes Stufenband oder Palettenband auf eine langsame Fördergeschwindigkeit gebracht werden, die beibehalten wird, bis der langsame Benutzer den Förderbereich verlässt. Wenn die Geschwindigkeit des Stufenbandes oder Palettenbandes bereits auf einer langsamen Fördergeschwindigkeit ist, kann die langsame Fördergeschwindigkeit beibehalten werden, bis der langsame Benutzer den Förderbereich verlassen hat beziehungsweise die Kammplatte des dem Förderbereich anschließenden Zugangsbereiches überschritten hat. Dies hilft insbesondere kleinen Kindern und Benutzern, die beispielsweise gehbeeinträchtigt oder sehbehindert sind, das Stufenband oder Palettenband zu betreten und sicher wieder zu verlassen.

Selbstverständlich kann die Geschwindigkeit des Antriebs auch dahingehend gesteuert werden, dass wenn sich ein Benutzer langsam der Kammplatte des Zugangsbereichs nähert, die Geschwindigkeit des Stufenbandes oder Palettenbandes von einer normalen Fördergeschwindigkeit auf eine langsame Fördergeschwindigkeit reduziert wird und erst von einer langsamen Fördergeschwindigkeit auf eine normale Fördergeschwindigkeit erhöht wird, wenn der langsame Benutzer den Förderbereich wieder verlassen hat.

Sofern länderspezifische Normen es erlauben, können in der Steuerung der Fahrtreppe oder des Fahrsteiges noch weitere Betriebsverfahren implementiert sein. Wenn sich beispielsweise ein Benutzer langsam beziehungsweise zögerlich der Kammplatte nähert, kann die Geschwindigkeit des Stufenbandes oder Palettenbandes von einer langsamen Fördergeschwindigkeit erst dann auf eine normale Fördergeschwindigkeit erhöht werden, wenn der langsame Benutzer die Kammplatte überschritten hat.

Ferner könnte die Geschwindigkeit des Antriebs auch dahingehend gesteuert werden, dass wenn sich ein Benutzer langsam der Kammplatte nähert, die Geschwindigkeit des Stufenbandes oder Palettenbandes von einer normalen Fördergeschwindigkeit auf eine langsame Fördergeschwindigkeit reduziert wird und erst von einer langsamen Fördergeschwindigkeit auf eine normale Fördergeschwindigkeit erhöht wird, wenn der langsame Benutzer die Kammplatte überschritten hat.

Um das Verlassen des Stufenbandes oder Palettenbandes für diese Benutzer zu erleichtern, kann die Steuerung die Geschwindigkeit des Stufenbandes oder Palettenbandes von einer normalen Fördergeschwindigkeit wieder auf eine langsame Fördergeschwindigkeit reduzieren, bevor die als langsame Benutzer identifizierten Personen die Kammplatte desjenigen Zugangsbereiches erreichen, an dem sie die Fahrtreppe oder den Fahrsteig verlassen werden.

Wenn sich eine Person längere Zeit in dem vom Überwachungssensor überwachten Zugangsbereich aufhält, kann dies ein Indiz sein, dass es sich um spielende Kinder oder Vandalen handelt. Um Unfälle zu vermeiden, kann in diesen Fällen beispielsweise das Stufenband oder Palettenband gestoppt oder zumindest die Fördergeschwindigkeit reduziert werden.

Wenn nun mehrere Benutzer der Fahrtreppe oder des Fahrsteiges deren Zugangsbereich betreten, kann ferner bei Anwesenheit eines langsamen Benutzers und eines schnellen Benutzers im Zugangsbereich eine langsame Fördergeschwindigkeit beibehalten oder die Fördergeschwindigkeit auf diese reduziert werden, bis der langsame Benutzer die Kammplatte desjenigen Zugangsbereiches überschritten hat, über den er die Fahrtreppe oder den Fahrsteig verlässt.

Selbstverständlich kann eine bestehenden Fahrtreppe oder ein bestehender Fahrsteig auch modernisiert werden, indem an mindestens einem feststehenden Teil der Fahrtreppe oder des Fahrsteiges zumindest ein in den Förderbereich hineinragender Vorsprung angeordnet wird, so dass mindestens ein Überwachungssensor zumindest teilweise im mindestens einen Vorsprung angeordnet werden kann.

Der mindestens eine in den Förderbereich hineinragende Vorsprung, welcher an einem feststehenden Teil der Fahrtreppe oder des Fahrsteiges angeordnet ist, wird im Folgenden anhand von Beispielen und mit Bezugnahme auf die Zeichnungen näher erläutert. Darin zeigen:
- Figur 1:: in dreidimensionaler Darstellung eine Fahrtreppe mit mindestens einem Vorsprung für einen Überwachungssensor;
- Figur 2:: in schematischer Darstellung einer der beiden Zugangsbereiche der in der Figur 1 dargestellten Fahrtreppe in der geschnittenen Seitenansicht;
- Figur 3:: in schematischer Darstellung der Zugangsbereich der Figur 2 in der Draufsicht;
- Figur 4:: ein grösser dargestellter, quer zur Längserstreckung der Fahrtreppe verlaufender Schnitt entlang einer in der Figur 3 mit A-A bezeichneten Schnittebene durch einen Vorsprung in einer ersten Ausgestaltung und
- Figur 5:: ein grösser dargestellter, quer zur Längserstreckung der Fahrtreppe verlaufender Schnitt entlang einer in der Figur 3 mit A-A bezeichneten Schnittebene durch einen Vorsprung in einer zweiten Ausgestaltung.

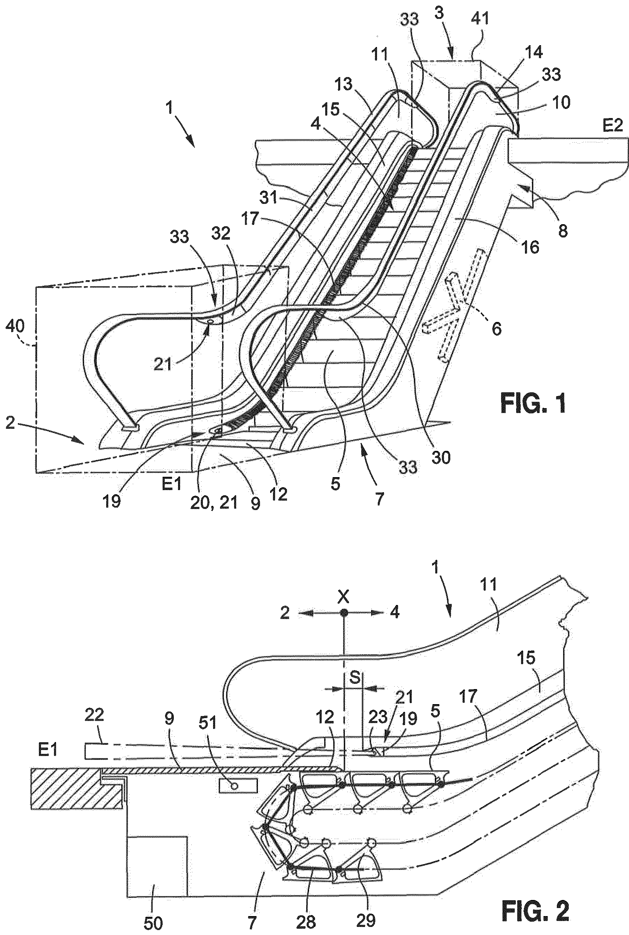

Figur 1 zeigt in dreidimensionaler Darstellung eine Fahrtreppe 1, die eine erste Etage E1 mit einer zweiten Etage E2 verbindet. Die Fahrtreppe 1 weist zwei Zugangsbereiche 2, 3 mit je einer Kammplatte 12 (nur eine sichtbar) und einen zwischen den Zugangsbereichen 2, 3 angeordneten Förderbereich 4 auf. Der Förderbereich 4 erstreckt sich in seiner Länge zwischen den Kammplatten 12 der beiden Zugangsbereiche 2, 3. Die Fahrtreppe 1 beinhaltet ein Tragwerk 6 beziehungsweise ein Fachwerk 6 mit zwei nicht einsehbaren Umlenkbereichen 7, 8, zwischen denen ein Stufenband 5 umlaufend geführt ist. Die Umlenkbereiche 7, 8 des Stufenbandes 5 sind jeweils unter einer Bodenabdeckung 9 der beiden Zugangsbereiche 2, 3 verborgen. Seitlich des Förderbereiches 4 erstrecken sich zwei Balustraden 10, 11, die jeweils einen umlaufenden Handlauf 13, 14 aufweisen. Die Balustraden 10, 11 sind an ihrem unteren Ende jeweils mittels eines Balustradensockels 15, 16 mit dem Tragwerk 6 verbunden.

Seitlich des jeweiligen Balustradensockels 15, 16 sind Abweiserbürsten 17, 18 (in der Figur 1 ist nur eine Abweiserbürste 17 sichtbar) angeordnet, die im Wesentlichen zum benachbarten Balustradensockel 15, 16 hin und damit in den Förderbereich 4 hineinragen. Die Abweiserbürsten 17,18 beziehungsweise die in den Förderbereich 4 hineinragenden Vorrichtungen 17, 18 erstrecken sich im Wesentlichen über die Länge des Förderbereiches 4. An jedem Ende der Abweiserbürsten 17, 18 ist ein gegen den benachbarten Zugangsbereich 2, 3 gerichtetes Anfangselement 19 am Balustradensockel 15, 16 angeordnet. Das Anfangselement 19 weist einen Hohlraum 20 zur Unterbringung eines Überwachungssensors 21 auf und stellt damit ein in den Förderbereich 4 hineinragender Vorsprung 19 dar. Unterhalb jedes Handlaufs 13, 14 erstreckt sich über die Länge des Förderbereiches 4 eine durch den Handlauf 13, 14 verborgene Handlaufführung, die eine in den Förderbereich 4 hineinragende Balustradenbeleuchtung 30, 31 beziehungsweise eine in den Förderbereich 4 hineinragende Vorrichtung 30, 31 beinhaltet. Die Balustradenbeleuchtung 30, 31 weist eine Abdeckung 32 auf, an deren beider Enden jeweils ein als Abschluss dienender, in den Förderbereich hineinragender Vorsprung 33 angeordnet ist. Auch in diesem Vorsprung 33 kann ein Überwachungssensor 21 angeordnet werden.

Die mit strichpunktierten Linien markierten Bereiche in den beiden Zugangsbereichen 2, 3 stellen einen möglichen Erfassungsraum 40, 41 eines in einem der vorangehend erwähnten Vorsprünge 19, 33 angeordneten Überwachungssensors 21 dar. Die Höhe der Erfassungsräume 40, 41 ist nur beispielhaft zu verstehen und hängt im Wesentlichen von der Art des Überwachungssensors 21 ab. Die beiden in der Figur 1 als Kubus dargestellten Erfassungsräume 40, 41 könnten beispielsweise mittels einer als Überwachungssensor 21 dienenden TOF- Kamera überwacht werden. Die von der TOF-Kamera erfassten Informationen können bei der Auswertung aufgrund ihrer Distanzinformation gefiltert werden, wodurch gewissermaßen Grenzen der Erfassungsräume 40, 41 definiert werden können.

Die Figur 2 zeigt schematisch in geschnittener Seitenansicht den in der ersten Etage E1 angeordneten Zugangsbereich 2 der in der Figur 1 dargestellten Fahrtreppe 1. Nachfolgend werden deshalb dieselben Bezugszeichen verwendet, wie in der Figur 1. Aufgrund der geschnittenen Seitenansicht ist nur eine der beiden Balustraden 11 dargestellt. Der einzige Unterschied zur in der Figur 1 dargestellten Fahrtreppe 1 besteht darin, dass an der Balustrade 11 keine Balustradenbeleuchtung angeordnet ist.

In der Figur 2 ist der Umlenkbereich 7 des Stufenbandes 5 unterhalb der Bodenabdeckung 9 sehr gut einsehbar. Das Stufenband 5 weist Zugmittel 28 auf, an denen Stufen 29 angeordnet sind. Die Kammplatte 12 ist im Zugangsbereich 2 angeordnet und schließt der Bodenabdeckung 9 an. Das gegen den Förderbereich gerichtete Ende der Kammplatte 12 stellt auch die Grenze X zwischen dem Zugangsbereich 2 und dem Förderbereich 4 dar.

Die am Balustradensockel 15 angeordnete Abweiserbürste 17 weist ein Anfangselement 19 auf. Im vorliegenden Ausführungsbeispiel ist ein Überwachungssensor 21 in dem als Vorsprung 19 dienenden Anfangselement 19 angeordnet. Die strichpunktiert dargestellten Grenzen des Erfassungskegels 22 dieses Überwachungssensors 21 sind nur beispielhaft zu verstehen.

Selbstverständlich können auch Überwachungssensoren 21 eingesetzt werden, die einen wesentlich größeren Öffnungswinkel des Erfassungskegels 22 aufweisen und nicht nur die Beine von Benutzern erfassen. Solche Überwachungssensoren 21 können dann auch die Körpergröße der Benutzer erfassen, so dass beispielsweise Kinder von erwachsenen Personen unterschieden werden können. Diese Informationen können dann in einer Steuerung 50 zur Ansteuerung eines nicht dargestellten Antriebes der Fahrtreppe 1 situationsgerecht verarbeitet werden, so dass beispielsweise das Stufenband 5 bei der Anwesenheit von Kindern im überwachten Zugangsbereich 2 gestoppt wird, wenn sich nicht mindestens eine erwachsene Person gleichzeitig in diesem Zugangsbereich 2 befindet. Je nach Größe und Typ des Überwachungssensors 21 kann dessen Auswertungs- und Steuerelektronik 51 von seinem Sensorkopf 23 getrennt angeordnet sein. Im vorliegenden Ausführungsbeispiel ist diese in einem separaten Gehäuse untergebracht, welches unterhalb der Bodenabdeckung 9 angeordnet ist. Der besseren Übersicht wegen sind keine Verbindungsleitungen zwischen dem Sensorkopf 23, der Auswertungs- und Steuerelektronik 51 und der Steuerung 50 dargestellt.

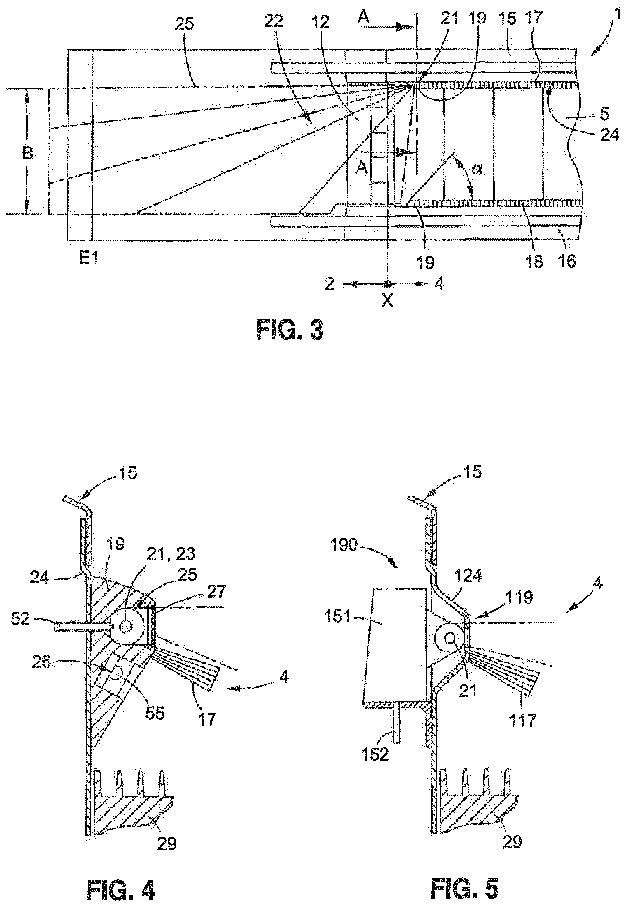

Die Abweiserbürste 17 erstreckt sich im Wesentlichen über die Länge des Förderbereiches 4. Im Wesentlichen deshalb, weil das Anfangselement 19 um einen Abstand S zur Grenze X im Förderbereich 4 angeordnet ist, so dass die gesamte Breite der Kammplatte 12 durch den Erfassungskegel 22 des Überwachungssensors 21 abdeckbar ist. Dies ist insbesondere aus der nachfolgend beschriebenen Figur 3 ersichtlich.

Figur 3 zeigt in schematischer Draufsicht den in der Figur 2 dargestellten Zugangsbereich 2 der Fahrtreppe 1. Aufgrund der Anordnung des Vorsprungs 19 im Förderbereich 4, kann die gesamte Breite B des Zugangsbereiches 2 von der durch die Kammplatte 12 definierten Grenze X an überwacht werden. Der in den Förderbereich 4 hineinragende Vorsprung 19 in Gestalt eines Anfangselements 19 einer Abweiserbürste 17 ermöglicht auch eine Erfassung entlang derjenigen Sockelwand 24 des Balustradensockels 15, an der der Vorsprung 19 mit dem Überwachungssensor 21 angeordnet ist. Die Projektionsfläche 25 des Erfassungskegels 22 des Überwachungssensors 21 ist mittels einer strichpunktierten Linie beispielhaft dargestellt.

In der Figur 3 ist ferner die bereits in der Beschreibung zur Figur 1 erwähnte, am Balustradensockel 16 angeordnete zweite Abweiserbürste 18 dargestellt. Auch die zweite Abweiserbürste 18 beziehungsweise Vorrichtung 18, ist an jedem ihrer Enden mit einem als Vorsprung 19 ausgebildeten Anfangselement 19 verbunden. Diese Vorsprünge 19 können unbesetzt bleiben, da der Erfassungskegel 22 des auf der gegenüberliegenden Seite des Förderbereiches 4 angeordneten Überwachungssensors 21 den gesamten Zugangsbereich 2 überwachen kann. Selbstverständlich kann beispielsweise aus Redundanzgründen auch in diesen Vorsprüngen 19 mindestens ein Überwachungssensor 21 angeordnet sein.

Anhand dieser Vorsprünge 19 ist auch dargestellt, dass deren Kontur zumindest in der Förderrichtung keine von Benutzern erreichbare Kante oder Fläche hat, die einen zwischen der Kante beziehungsweise der Fläche und der Förderrichtung des Stufenbandes 5 eingeschlossenen Winkel 90° > α > 0° aufweist. Vorzugsweise sind alle Kanten des Vorsprungs 19 gerundet und, sofern vorhanden, dessen Flächen gegebenenfalls bombiert, so dass der Vorsprung 19 zumindest in der Förderrichtung eine stetig verlaufende, gewissermaßen stromlinienförmige Kontur aufweist.

In der Figur 4 ist ein quer zur Längserstreckung der Fahrtreppe 1 verlaufender Querschnitt eines Vorsprungs 19 vergrößert dargestellt, wobei dessen Schnittebene A-A in der Figur 3 angegeben ist. Die Figur 4 zeigt den als Anfangselement 19 der Abweiserbürste 17 ausgestalteten Vorsprung 19 in einer ersten Ausgestaltung. Der beispielsweise als schlagfestes Kunststoffteil ausgeführte Vorsprung 19 kann an der Sockelwand 24 des Balustradensockels 15 befestigt werden. Der besseren Übersicht wegen ist ferner ein Teil einer Stufe 29 dargestellt.

Im Vorsprung 19 ist ein erster Hohlraum 25 ausgebildet, in welchem der Überwachungssensor 21 oder zumindest dessen Sensorkopf 23 untergebracht ist. Der erste Hohlraum 25 ist mittels einer transparenten Abdeckung 27 gegen den Förderbereich 4 hin abgeschlossen. Wenn der Überwachungssensor 21 beispielsweise ein Radarsensor ist, dessen Radarwellen opake Kunststoffteile zu durchdringen vermag, kann die transparente Abdeckung 27 selbstverständlich entfallen und der erste Hohlraum 25 durch eine Gehäusewand des Vorsprungs 19 gegen den Förderbereich 4 hin abgeschlossen sein. Der Überwachungssensor 21 muss dann beispielsweise von der gegen die Sockelwand 24 gerichteten Seite in den ersten Hohlraum 25 eingefügt werden. Vom Überwachungssensor 21 führt ein Kabel 52 zur nicht dargestellten Auswertungs- und Steuerungselektronik des Überwachungssensors 21.

Im Schnitt A-A ist noch ein zweiter Hohlraum 26 erkennbar, in dem ein Leuchtmittel 55 angeordnet ist. Dieses Leuchtmittel 55 kann beispielsweise auf die in den vorangehend beschriebenen Figuren 1 bis 3 dargestellten Kammplatte 12 gerichtet sein, um diese zu beleuchten und dadurch einen Benutzer auf die Grenze X zwischen dem jeweiligen Zugangsbereich 2, 3 und dem Förderbereich 4 aufmerksam zu machen. Der zweite Hohlraum 26 kann aber auch den Anfang beziehungsweise den Abschluss einer sich über die Länge der Abweiserbürste 17 erstreckenden Stufenbandbeleuchtung bilden, wobei unterhalb der Abweiserbürste 17 ein Leuchtmittelband 55 in einem sich über die Länge der Abweiserbürste 17 erstreckenden Hohlraum 26 angeordnet ist.

Selbstverständlich kann die vorangehend beschriebene Stufenbandbeleuchtung auch ohne Abweiserbürste 17 im Förderbereich 4 angeordnet sein.

In der Figur 5 ist ein quer zur Längserstreckung der Fahrtreppe 1 verlaufender Querschnitt eines Vorsprungs 119 vergrößert dargestellt, wobei dessen Schnittebene A-A in der Figur 3 angegeben ist. Die Figur 5 zeigt den als Anfangselement 119 der Abweiserbürste 117 ausgestalteten Vorsprung 119 in einer zweiten Ausgestaltung. Die zweite Ausgestaltung des in den Förderbereich 4 hineinragenden Vorsprungs 119 unterscheidet sich vom ersten, in Figur 4 gezeigten Vorsprung 19 dadurch, dass dieser direkt an der Sockelwand 124 angeformt und nicht wie in der Figur 3 gezeigt, an der Sockelwand 24 als separates Bauteil angebaut ist. Der besseren Übersicht wegen ist in der Figur 5 ebenfalls ein Teil einer Stufe 29 dargestellt.

Vorsprünge 119 dieser Art können beispielsweise mittels eines Tiefziehverfahrens oder Prägeverfahrens hergestellt werden, wobei zum Beispiel ein Sockelblech, welches die Sockelwand 124 des Balustradensockels 115 bildet, entsprechend umgeformt werden kann. Aufgrund des beulenartig angeformten Vorsprungs 119 steht zum Einbau des Überwachungssensors 21 nicht nur ein durch das Volumen des Vorsprungs 119 begrenzter Hohlraum zur Verfügung, sondern ein wesentlich größerer Innenraum 190 der Fahrtreppe 1. Dadurch lässt sich auch die Auswertungs- und Steuerelektronik 151 in unmittelbarer Nähe beim Überwachungssensor 21 im Innenraum 190 anordnen. Von der Auswertungs- und Steuerelektronik 151 des Überwachungssensors 21 führt ein Kabel 152 zur in der Figur 2 dargestellten Steuerung 50 der Fahrtreppe 1.

Obwohl die Erfindung durch die Darstellung spezifischer Ausführungsbeispiele anhand einer Fahrtreppe beschrieben worden ist, ist es offensichtlich, dass zahlreiche weitere Ausführungsvarianten in Kenntnis der vorliegenden Erfindung geschaffen werden können. Beispielsweise sind dieselben Ausführungsbeispiele auch bei einem Fahrsteig einsetzbar.

## Patentansprüche

1. Fahrtreppe (1) oder Fahrsteig, aufweisend zwei Zugangsbereiche (2, 3) mit je einer Kammplatte (12) und einen zwischen den Zugangsbereichen (2, 3) angeordneten Förderbereich (4), welcher Förderbereich (4) sich in seiner Länge zwischen den beiden Kammplatten (12) der Zugangsbereiche (2, 3) erstreckt und quer zu seiner Länge durch Balustraden (10, 11) und Balustradensockel (15, 16) der Fahrtreppe (1) oder des Fahrsteiges begrenzt ist, wobei an mindestens einem feststehenden Teil der Fahrtreppe (1) oder des Fahrsteiges zumindest ein in den Förderbereich (4) hineinragender Vorsprung (19, 33, 119) angeordnet ist, wobei mindestens ein Überwachungssensor (21) zumindest teilweise in mindestens einem Vorsprung (19, 33, 119) angeordnet ist, **dadurch gekennzeichnet, dass** der Überwachungssensor (21) zur Überwachung eines zugeordneten Zugangsbereiches (2, 3) dient.

2. Fahrtreppe (1) oder Fahrsteig nach Anspruch 1, wobei die Position des Vorsprungs (19, 33, 119) relativ zum überwachenden Zugangsbereich (2, 3) so angeordnet ist, dass der zu überwachende Zugangsbereich (2, 3) in seiner, durch die Balustraden (10, 11) und Balustradensockel (15, 16) der Fahrtreppe (1) oder des Fahrsteiges definierten Breite (B) und in seiner Länge, die sich von der Kammplatte (12) bis mindestens zu den, im Bereich des zu überwachenden Zugangsbereiches (2, 3) angeordneten Enden der beiden Balustraden (10, 11) erstreckt, durch einen Erfassungskegel (22) des Überwachungssensors (21) abdeckbar ist.

3. Fahrtreppe (1) oder Fahrsteig nach einem der Ansprüche 1 oder 2, wobei durch einen Erfassungskegel (22) des Überwachungssensors (21) auch entlang einer Wand (10, 11, 24, 124), in oder an welcher der Vorsprung (19, 33, 119) mit dem Überwachungssensor (21) angeordnet ist, Objekte erfassbar sind.

4. Fahrtreppe (1) oder Fahrsteig nach einem der Ansprüche 1 bis 3, wobei am Vorsprung (19, 33, 119) eine in den Förderbereich (4) hineinragende Vorrichtung (17, 18) angeordnet ist.

5. Fahrtreppe (1) oder Fahrsteig nach Anspruch 4, wobei sich die Vorrichtung (17, 18) über mindestens einen Viertel der Länge des Förderbereiches (4) erstreckt.

6. Fahrtreppe (1) oder Fahrsteig nach Anspruch 4, wobei jedem der beiden Zugangsbereiche (2, 3) mindestens ein Überwachungssensor (21) in einem Vorsprung (19, 33, 119) zugeordnet ist und sich die Vorrichtung (17, 18) zwischen den beiden Vorsprüngen (19, 33, 119) erstreckt.

7. Fahrtreppe (1) oder Fahrsteig nach Anspruch 5 oder 6, wobei der feststehende Teil ein Balustradensockel (15, 16, 115), die Vorrichtung eine Abweiserbürste (17, 18), und der Vorsprung (19, 33, 119) ein am Balustradensockel (15, 16, 115) angeordnetes Anfangselement (19) der Abweiserbürste (17, 18) ist.

8. Fahrtreppe (1) oder Fahrsteig nach Anspruch 5 oder 6, wobei der feststehende Teil eine Balustrade (10, 11) ist, die Vorrichtung eine Handlaufführung der Balustrade (10, 11) ist und der Vorsprung (19, 33, 119) an der Handlaufführung ausgebildet ist.

9. Fahrtreppe (1) oder Fahrsteig nach Anspruch 5 oder 6, wobei der feststehende Teil eine Balustradenbeleuchtung (30, 31) ist, die Vorrichtung eine Abdeckung (32) der Balustradenbeleuchtung (30, 31) ist und der Vorsprung (33) an der Abdeckung (32) ausgebildet ist.

10. Fahrtreppe (1) oder Fahrsteig nach Anspruch 5 oder 6, wobei der feststehende Teil ein Balustradensockel (15, 16) ist, die Vorrichtung eine Stufenbandbeleuchtung (26) oder eine Palettenbandbeleuchtung ist und der Vorsprung (19, 33, 119) ein Anfangselement (19) der Stufenbandbeleuchtung (26) oder Palettenbandbeleuchtung ist.

11. Fahrtreppe (1) oder Fahrsteig nach einem der Ansprüche 1 bis 10, wobei ein Sensorkopf (23) des Überwachungssensors (21) im Vorsprung (19, 33, 119) und ein Sensorgehäuse (151) des Überwachungssensors (21) in einem, durch Verkleidungen (124) abgegrenzten Innenraum (190) der Fahrtreppe (1) oder des Fahrsteiges angeordnet sind.

12. Fahrtreppe (1) oder Fahrsteig nach einem der Ansprüche 1 bis 11, wobei der Überwachungssensor (21) ein Radarsensor, ein Infrarotsensor, ein Laserscanner, eine CCD-Kamera oder eine TOF- Kamera ist.

13. Verfahren zur Modernisierung einer bestehenden Fahrtreppe (1) oder eines bestehenden Fahrsteiges, aufweisend zwei Zugangsbereiche (2, 3) mit je einer Kammplatte (12) und einen zwischen den Zugangsbereichen (2, 3) angeordneten Förderbereich (4), welcher Förderbereich (4) sich in seiner Länge zwischen den beiden Kammplatten (12) der Zugangsbereiche (2, 3) erstreckt und quer zu seiner Länge durch Balustraden (10, 11) und Balustradensockel (15, 16) der Fahrtreppe (1) oder des Fahrsteiges begrenzt wird, wobei an mindestens einem feststehenden Teil der Fahrtreppe (1) oder des Fahrsteiges zumindest ein in den Förderbereich (4) hineinragender Vorsprung (19, 33, 119) angeordnet wird, wobei mindestens ein Überwachungssensor (21) zumindest teilweise im zumindest einen Vorsprung (19, 33, 119) angeordnet werden kann, **dadurch gekennzeichnet, dass** der Überwachungssensor (21) zur Überwachung eines zugeordneten Zugangsbereiches (2, 3) dient.

14. Verfahren zum Betrieb einer Fahrtreppe (1) oder eines Fahrsteiges nach einem der Ansprüche 1 bis 12 mit mindestens einem im Vorsprung (19, 33, 119) angeordneten Überwachungssensor (21), **dadurch gekennzeichnet, dass** durch den Überwachungssensor (21) generierte Überwachungssignale dahingehend ausgewertet werden,
• ob sich ein Benutzer rasch der Kammplatte (12) nähert,
• ob sich ein Benutzer langsam der Kammplatte (12) nähert, oder
• ob sich eine Person längere Zeit im vom Überwachungssensor (21) überwachten Zugangsbereich (2, 3) aufhält.

15. Verfahren zum Betrieb einer Fahrtreppe (1) oder eines Fahrsteiges nach Anspruch 14, wobei mindestens einer der folgenden Schritte ausgeführt wird:
• wenn sich ein Benutzer rasch der Kammplatte (12) des Zugangsbereiches (2, 3) nähert, die Geschwindigkeit des Stufenbandes (5) oder Palettenbandes von einer langsamen Fördergeschwindigkeit auf eine normale Fördergeschwindigkeit erhöht wird, bevor der Benutzer die Kammplatte (12) in Richtung Förderbereich (4) überschritten hat,
• wenn sich ein Benutzer langsam der Kammplatte (12) des Zugangsbereiches (2, 3) nähert, ein stehendes Stufenband (5) oder Palettenband auf eine langsame Fördergeschwindigkeit gebracht wird die beibehalten wird, bis der langsame Benutzer den Förderbereich (4) wieder verlassen hat,
• wenn sich ein Benutzer langsam der Kammplatte (12) des Zugangsbereiches (2, 3) nähert und die Geschwindigkeit des Stufenbandes (5) oder Palettenbandes bereits auf einer langsamen Fördergeschwindigkeit ist, die langsame Fördergeschwindigkeit beibehalten wird, bis der langsame Benutzer den Förderbereich (4) wieder verlassen hat,
• wenn sich ein Benutzer langsam der Kammplatte (12) des Zugangsbereichs (2, 3) nähert, die Geschwindigkeit des Stufenbandes (5) oder Palettenbandes von einer normalen Fördergeschwindigkeit auf eine langsame Fördergeschwindigkeit reduziert wird und erst von einer langsamen Fördergeschwindigkeit auf eine normale Fördergeschwindigkeit erhöht wird, wenn der langsame Benutzer den Förderbereich (4) wieder verlassen hat,
• wenn sich ein Benutzer langsam der Kammplatte (12) nähert, die Geschwindigkeit des Stufenbandes (5) oder Palettenbandes von einer langsamen Fördergeschwindigkeit erst dann auf eine normale Fördergeschwindigkeit erhöht wird, wenn der langsame Benutzer die Kammplatte (12) überschritten hat,
• wenn sich ein Benutzer langsam der Kammplatte (12) nähert, die Geschwindigkeit des Stufenbandes (5) oder Palettenbandes von einer normalen Fördergeschwindigkeit auf eine langsame Fördergeschwindigkeit reduziert wird und erst von einer langsamen Fördergeschwindigkeit auf eine normale Fördergeschwindigkeit erhöht wird, wenn der langsame Benutzer die Kammplatte (12) überschritten hat,
• wenn sich eine Person längere Zeit in dem vom Überwachungssensor (21) überwachten Zugangsbereich (2, 3) aufhält, das Stufenband (5) oder Palettenband gestoppt wird.

16. Verfahren zum Betrieb einer Fahrtreppe (1) oder eines Fahrsteiges nach Anspruch 14 oder 15, wobei bei Anwesenheit eines langsamen Benutzers und eines schnellen Benutzers eine langsame Fördergeschwindigkeit beibehalten oder eine normale Fördergeschwindigkeit auf diese reduziert wird, bis der langsame Benutzer den Förderbereich (4) wieder verlassen hat.

## Claims

1. Escalator (1) or moving walkway having two access regions (2, 3) each with a comb plate (12) and a conveying region (4) arranged between the access regions (2, 3), which conveying region (4) extends in its length between the two comb plates (12) of the access regions (2, 3) and is bounded transversely to its length by balustrades (10, 11) and balustrade bases (15, 16) of the escalator (1) or moving walkway, wherein at least one projection (19, 33, 119) projecting into the conveying region (4) is arranged at at least one stationary part of the escalator (1) or moving walkway, wherein at least one monitoring sensor (21) is arranged at least partly in at least one projection (19, 33, 119) **characterised in that** the monitoring sensor (21) serves for monitoring an associated access region (2, 3).

2. Escalator (1) or moving walkway according to claim 1, wherein the position of the projection (19, 33, 119) relative to the access region (2, 3) to be monitored is so arranged that the access region (2, 3) to be monitored can be covered in its width (B), which is defined by the balustrades (10, 11) and balustrade bases (15, 16) of the escalator (1) or moving walkway, and in its length, which extends from the comb plate (12) to at least those ends of the two balustrades (10, 11) which are arranged in the vicinity of the access region (2, 3) to be monitored, by a detection cone (22) of the monitoring sensor (21).

3. Escalator (1) or moving walkway according to claim 1 or 2, wherein objects are detectable by a detection cone (22) of the monitoring sensor (21) also along a wall (10, 11, 24, 124) in or at which the projection (19, 33, 119) with the monitoring sensor (21) is arranged.

4. Escalator (1) or moving walkway according to any one of claims 1 to 3, wherein a device (17, 18) projecting into the conveying region (4) is arranged at the projection (19, 33, 119).

5. Escalator (1) or moving walkway according to claim 4, wherein the device (17, 18) extends over at least a quarter of the length of the conveying region (4).

6. Escalator (1) or moving walkway according to claim 4, wherein at least one monitoring sensor (21) in a projection (19, 33, 119) is associated with each of the two access regions (2, 3) and the device (17, 18) extends between the two projections (19, 33, 119).

7. Escalator (1) or moving walkway according to claim 5 or 6, wherein the stationary part is a balustrade base (15, 16, 115), the device is a deflector brush (17, 18) and the projection (19, 33, 119) is a start element (19) of the deflector brush (17, 18), which is arranged at the balustrade base (15, 16, 115).

8. Escalator (1) or moving walkway according to claim 5 or 6, wherein the stationary part is a balustrade (10, 11), the device is a handrail guide of the balustrade (10, 11) and the projection (19, 33, 119) is formed at the handrail guide.

9. Escalator (1) or moving walkway according to claim 5 or 6, wherein the stationary part is balustrade lighting means (30, 31), the device is a cover (32) of the balustrade lighting means (30, 31) and the projection (33) is formed at the cover (32).

10. Escalator (1) or moving walkway according to claim 5 or 6, wherein the stationary part is a balustrade base (15, 16), the device is step-belt lighting means (26) or plate-belt lighting means and the projection (19, 33, 119) is a start element (19) of the step-belt lighting means (26) or plate-belt lighting means.

11. Escalator (1) or moving walkway according to any one of claims 1 to 10, wherein a sensor head (23) of the monitoring sensor (21) is arranged in the projection (19, 33, 119) and a sensor housing (151) of the monitoring sensor (21) is arranged in an interior space (190), which is delimited by claddings (124), of the escalator (1) or moving walkway.

12. Escalator (1) or moving walkway according to any one of claims 1 to 11, wherein the monitoring sensor (21) is a radar sensor, an infrared sensor, a laser scanner, a charge-coupled-device camera or a time-of-flight camera.

13. Method of modernising an existing escalator (1) or an existing moving walkway, having two access regions (2, 3) each with a comb plate (12) and a conveying region (4) arranged between the access regions (2, 3), which conveying region (4) extends in its length between the two comb plates (12) of the access regions (2, 3) and is bounded transversely to its length by balustrades (10, 11) and balustrade bases (15, 16) of the escalator (1) or moving walkway, wherein at least one projection (19, 33, 119) projecting into the conveying region (4) is arranged at at least one stationary part of the escalator (1) or the moving walkway, wherein at least one monitoring sensor (21) can be arranged at least partly in at least one projection (19, 33, 119), **characterised in that** the monitoring sensor (21) serves for monitoring an associated access region (2, 3).

14. Method of operating an escalator (1) or a moving walkway according to any one of claims 1 to 12 with at least one monitoring sensor (21) arranged in the projection (19, 33, 119), **characterised in that** monitoring signals generated by the monitoring sensor (21) are evaluated with respect to
- whether a user rapidly approaches the comb plate (12),
- whether a user slowing approaches the comb plate (12) or
- whether a person remains for a longer period of time in the access region (2, 3) monitored by the monitoring sensor (21).

15. Method of operating an escalator (1) or a moving walkway according to claim 14, wherein at least one of the following steps is carried out:
- if a user rapidly approaches the comb plate (12) of the access region (2, 3) the speed of the step belt (5) or plate belt is increased from a slow conveying speed to a normal conveying speed before the user has gone past the comb plate (12) in the direction of the conveying region (4),
- if a user slowly approaches the comb plate (12) of the access region (2, 3) a stationary step belt (5) or plate belt is brought to a slow conveying speed, which is maintained until the slow user has left the conveying region (4) again,
- if a user slowly approaches the comb plate (12) of the access region (2, 3) and the speed of the step belt (5) or plate belt is already at a slow conveying speed the slow conveying speed is maintained until the slow user has left the conveying region (4) again,
- if a user slowly approaches the comb plate (12) of the access region (2, 3) the speed of the step belt (5) or plate belt is reduced from a normal conveying speed to a slow conveying speed and is increased from a slow conveying speed to a normal conveying speed only when the slow user has left the conveying region (4) again,
- if a user slowly approaches the comb plate (12) the speed of the step belt (5) or plate belt is increased from a slow conveying speed to a normal conveying speed only when the slow user has gone past the comb plate (12),
- if a user slowly approaches the comb plate (12) the speed of the step belt (5) or plate belt is reduced from a normal conveying speed to a slow conveying speed and is increased from a slow conveying speed to a normal conveying speed only when the slow user has gone past the comb plate (12) and
- if a person remains for a longer period of time in the access region (2, 3) monitored by the monitoring sensor (21) the step belt (5) or plate belt is stopped.

16. Method of operating an escalator (1) or a moving walkway according to claim 14 or 15, wherein in the case of presence of a slow user and a fast user a slow conveying speed is maintained, or a normal conveying speed is reduced thereto until the slow user has left the conveying region (4) again.

## Revendications

1. Escalier roulant (1) ou trottoir roulant comportant deux zones d'accès (2, 3) avec chacune une plaque à peigne de seuil (12) et une zone de transport (4) disposée entre les zones d'accès (2, 3), laquelle zone de transport (4) s'étend dans sa longueur entre les deux plaques à peigne de seuil (12) des zones d'accès (2, 3) et est limitée transversalement à sa longueur par des balustrades (10, 11) et des socles de balustrade (15, 16) de l'escalier roulant (1) ou du trottoir roulant, sachant que sur au moins une partie fixe de l'escalier roulant (1) ou du trottoir roulant est au moins disposé un élément en saillie (19, 33, 119) pénétrant au moins dans la zone de transport (4), sachant qu'au moins un capteur de surveillance (21) est disposé au moins en partie dans au moins un élément en saillie (19, 33, 119), **caractérisé en ce que** le capteur de surveillance (21) sert à surveiller une zone d'accès (2, 3) attribuée.

2. Escalier roulant (1) ou trottoir roulant selon la revendication 1, sachant que la position de l'élément en saillie (19, 33, 119) est disposée par rapport à la zone d'accès (2, 3) à surveiller de telle manière que la zone d'accès (2, 3) à surveiller peut être couverte par un cône de saisie (22) du capteur de surveillance (21) dans sa largeur (B) définie par les balustrades (10, 11) et les socles de balustrade (15, 16) de l'escalier roulant (1) ou du trottoir roulant et dans sa longueur, qui s'étend de la plaque à peigne de seuil (12) jusqu'à au moins les extrémités des deux balustrades (10, 11) disposées dans la zone de la zone d'accès (2, 3) à surveiller.

3. Escalier roulant (1) ou trottoir roulant selon l'une quelconque des revendications 1 ou 2, sachant que des objets peuvent être saisis par un cône de saisie (22) du capteur de surveillance (21) également le long d'une paroi (10, 11, 24, 124), dans ou sur laquelle est disposé l'élément en saillie (19, 33, 119) avec le capteur de surveillance (21).

4. Escalier roulant (1) ou trottoir roulant selon l'une quelconque des revendications 1 à 3, sachant qu'un dispositif (17, 18) pénétrant dans la zone de transport (4) est disposé sur l'élément en saillie (19, 33, 119).

5. Escalier roulant (1) ou trottoir roulant selon la revendication 4, sachant que le dispositif (17, 18) s'étend sur au moins un quart de la longueur de la zone de transport (4).

6. Escalier roulant (1) ou trottoir roulant selon la revendication 4, sachant qu'à chacune des deux zones d'accès (2, 3) est attribué au moins un capteur de surveillance (21) dans un élément en saillie (19, 33, 119) et le dispositif (17, 18) s'étend entre les deux éléments en saillie (19, 33, 119).

7. Escalier roulant (1) ou trottoir roulant selon la revendication 5 ou 6, sachant que la partie fixe est un socle de balustrade (15, 16, 115), le dispositif une brosse déflectrice (17, 18) et l'élément en saillie (19, 33, 119) un élément initial (19) de la brosse déflectrice (17, 18) disposé sur le socle de balustrade (15, 16, 115).

8. Escalier roulant (1) ou trottoir roulant selon la revendication 5 ou 6, sachant que la partie fixe est une balustrade (10, 11), le dispositif un guidage de main courante de la balustrade (10, 11) et l'élément en saillie (19, 33, 119) est constitué sur le guidage de main courante.

9. Escalier roulant (1) ou trottoir roulant selon la revendication 5 ou 6, sachant que la partie fixe est un éclairage de balustrade (30, 31), le dispositif est une couverture (32) de l'éclairage de balustrade (30, 31) et l'élément en saillie (33) est constitué sur la couverture (32).

10. Escalier roulant (1) ou trottoir roulant selon la revendication 5 ou 6, sachant que la partie fixe est un socle de balustrade (15, 16), le dispositif est un éclairage de bande de marches (26) ou un éclairage de bande de palettes et l'élément en saillie (19, 33, 119) est un élément initial (19) de l'éclairage de bande de marches (26) ou de l'éclairage de bande de palettes.

11. Escalier roulant (1) ou trottoir roulant selon l'une quelconque des revendications 1 à 10, sachant qu'une tête de capteur (23) du capteur de surveillance (21) est disposée dans l'élément en saillie (19, 33, 119) et un boîtier de capteur (151) du capteur de surveillance (21) est disposé dans un espace intérieur (190) de l'escalier roulant (1) ou du trottoir roulant, délimité par les revêtements (124).

12. Escalier roulant (1) ou trottoir roulant selon l'une quelconque des revendications 1 à 11, sachant que le capteur de surveillance (21) est un capteur à radar, un capteur à infrarouge, un capteur à laser, une caméra à dispositif de transfert de charge (DTC) ou une caméra de temps de vol (TDV).

13. Procédé de modernisation d'un escalier roulant (1) existant ou d'un trottoir roulant existant, comportant deux zones d'accès (2, 3) avec chacune une plaque à peigne de seuil (12) et une zone de transport (4) disposée entre les zones d'accès (2, 3), laquelle zone de transport (4) s'étend dans sa longueur entre les deux plaques à peigne de seuil (12) des zones d'accès (2, 3) et est limitée transversalement à sa longueur par des balustrades (10, 11) et des socles de balustrade (15, 16) de l'escalier roulant (1) ou du trottoir roulant, sachant que sur au moins une partie fixe de l'escalier roulant (1) ou du trottoir roulant est disposé au moins un élément en saillie (19, 33, 119) pénétrant dans la zone de transport (4), sachant qu'au moins un capteur de surveillance (21) peut être disposé au moins en partie dans au moins un élément en saillie (19, 33, 119), **caractérisé en ce que** le capteur de surveillance (21) sert à surveiller une zone d'accès (2, 3) attribuée.

14. Procédé destiné à faire fonctionner un escalier roulant (1) ou un trottoir roulant selon l'une quelconque des revendications 1 à 12 avec au moins un capteur de surveillance (21) disposé dans l'élément en saillie (19, 33, 119), **caractérisé en ce que** des signaux de surveillance générés par le capteur de surveillance (21) sont exploités en ce sens,
• lorsqu'un utilisateur s'approche rapidement de la plaque à peigne de seuil (12),
• lorsqu'un utilisateur s'approche lentement de la plaque à peigne de seuil (12), ou
• lorsqu'une personne s'attarde plus longtemps dans la zone d'accès (2, 3) surveillée par le capteur de surveillance (21).

15. Procédé destiné à faire fonctionner un escalier roulant (1) ou un trottoir roulant selon la revendication 14, sachant qu'au moins une des étapes suivantes est exécutée :
• lorsqu'un utilisateur s'approche rapidement de la plaque à peigne de seuil (12) de la zone d'accès (2, 3), la vitesse de la bande de marches (5) ou de la bande de palettes est augmentée d'une vitesse de transport lente à une vitesse de transport normale avant que l'utilisateur n'ait franchi la plaque à peigne de seuil (12) en direction de la zone de transport (4),
• lorsqu'un utilisateur s'approche lentement de la plaque à peigne de seuil (12) de la zone d'accès (2, 3), une bande de marches (5) ou une bande de palettes fixe est placée à une vitesse de transport lente, qui est maintenue jusqu'à ce que l'utilisateur lent ait à nouveau quitté la zone de transport (4),
• lorsqu'un utilisateur s'approche lentement de la plaque à peigne de seuil (12) de la zone d'accès (2, 3) et la vitesse de la bande de marches (5) ou de la bande de palettes est déjà à une vitesse de transport lente, la vitesse de transport lente est maintenue jusqu'à ce que l'utilisateur lent ait à nouveau quitté la zone de transport (4),
• lorsqu'un utilisateur s'approche lentement de la plaque à peigne de seuil (12) de la zone d'accès (2, 3), la vitesse de la bande de marches (5) ou de la bande de palettes est réduite d'une vitesse de transport normale à une vitesse de transport lente et n'est augmentée d'une vitesse de transport lente à une vitesse de transport normale que lorsque l'utilisateur lent a à nouveau quitté la zone de transport (4),
• lorsqu'un utilisateur s'approche lentement de la plaque à peigne de seuil (12), la vitesse de la bande de marches (5) ou de la bande de palettes n'est augmentée d'une vitesse de transport lente à une vitesse de transport normale que lorsque l'utilisateur lent a franchi la plaque à peigne de seuil (12),
• lorsqu'un utilisateur s'approche lentement de la plaque à peigne de seuil (12), la vitesse de la bande de marches (5) ou de la bande de palettes est réduite d'une vitesse de transport normale à une vitesse de transport lente et n'est augmentée d'une vitesse de transport lente à une vitesse de transport normale que lorsque l'utilisateur lent a franchi la plaque à peigne de seuil (12),
• lorsqu'une personne s'attarde plus longtemps dans la zone d'accès (2, 3) surveillée par le capteur de surveillance (21), la bande de marches (5) ou bande de palettes est arrêtée.

16. Procédé destiné à faire fonctionner un escalier roulant (1) ou un trottoir roulant selon la revendication 14 ou 15, sachant qu'en présence d'un utilisateur long et d'un utilisateur rapide, une vitesse de transport lente est conservée ou une vitesse de transport normale est réduite à celle-ci jusqu'à ce que l'utilisateur lent ait à nouveau quitté la zone de transport (4).
